# EUROPÄISCHE PATENTSCHRIFT

(11) **EP 2 203 381 B1**
(45) Veröffentlichungstag und Bekanntmachung des Hinweises auf die Patenterteilung: **18.05.2011**
(21) Anmeldenummer: 08840864.6
(22) Anmeldetag: 17.10.2008
(51) Int. Cl.: C01B 11/18, C08K 5/00

(54) **VERFAHREN ZUR HERSTELLUNG EINES GRANULATES AUSGEHEND VON TRIETHANLAMIN UND EINEM ALKALI- BZW. ERDALKALIPERCHLORAT**
METHOD FOR PRODUCING A GRANULATE FROM TRIETHANOLAMINE AND AN ALKALINE OR EARTH ALKALINE PERCHLORATE
PROCÉDÉS DE FABRICATION D'UN GRANULÉ À PARTIR DE TRIÉTHANLAMINE ET D'UN PERCHLORATE ALCALIN OU ALCALINOTERREUX

(30) Priorität: 22.10.2007 DE 102007050428
(43) Veröffentlichungstag der Anmeldung: 07.07.2010
(73) Patentinhaber: CATENA Additives GmbH & Co. KG, 64665 Alsbach-Hähnlein (DE)
(72) Erfinder: BECK, Reinhard, 04105 Leipzig (DE); HACKER, Peter, 80995 München (DE); WEHNER, Wolfgang, 64673 Zwingenberg (DE); DAVE, Trupti, 64673 Zwingenberg (DE); SCHOLZ, Stefan, 64673 Zwingenberg (DE)
(74) Vertreter: Büchel, Edwin
(86) Internationale Anmeldenummer: PCT/EP2008/008809
(87) Internationale Veröffentlichungsnummer: WO 2009/053000

(56) Entgegenhaltungen:
- WO-A-2006/136191
- DE-A1-102005 031 624
- DE-U1-202006 018 816
- US-A- 5 190 700

## Beschreibung

Die vorliegende Erfindung betrifft ein Verfahren zur Herstellung eines Granulates ausgehend von 2,2',2"-Nitrilotriethanol und mindestens einem Alkali- oder Erdalkaliperchlorat sowie daraus erhältliche Granulate und deren Verwendung.

Es ist bekannt, Alkali- oder Erdalkaliperchlorate als Additive für Kunststoffe, insbesondere als Stabilisatoren für Polyvinylchlorid (PVC) einzusetzen. Am häufigsten wird hierzu wasserfreies Natriumperchlorat (NaP) oder Natriumperchlorat-Monohydrat (NaP·H₂O) verwendet.

Nachteilige Eigenschaften stehen jedoch einer breiteren Anwendung entgegen. Aufgrund des hohen Schmelzpunktes (482 °C) sind beide Produkte in Kunststoffen schwierig zu dispergieren. NaP zeigt hygroskopisches Verhalten, was beim Öffnen von Gebinden zu berücksichtigen ist und deshalb seine spätere Nutzung erschwert.

Natriumperchlorat-Monohydrat neigt bei Lagerung zu Verklumpung, was ebenfalls eine Entnahme aus Gebinden erschwert. Es wurde zwar vorgeschlagen, diese Eigenschaft durch Zugabe von Antibackmitteln (EP 1.382.569) zu modifizieren. Bei Zusatz von Tricalciumphosphat wird jedoch der hohe Schmelzpunkt nicht herabgesetzt.

Ferner sind Natriumperchlorat und Natriumperchlorat-Monohydrat beim Erhitzen explosiv und wirken als Oxidans, was eine entsprechende Kennzeichnung von verpackter Ware erforderlich macht und die Anforderungen an die Lagerung dieser Ware erhöht. Weiterhin ist eine Vorratshaltung in Gegenwart von organischen (brennbaren) Stoffen zu vermeiden. Die Verwendung in Reaktoren ist nicht universell, da auch hier entsprechende Auflagen einzuhalten sind.

Um eine Dispergierung in Kunststoffen zu erleichtern, werden feste und flüssige Formulierungen angeboten. Feste Produkte entstehen beim Versprühen von wäßrigen NaP-Lösungen auf anorganischen Mineralien wie Calciumsilikat. Diese Vorgehensweise soll außerdem zu einer Inertisierung führen (US 5.225.108). Ähnlich wird auch empfohlen, wäßrige Natriumperchlorat-Lösung auf Calcium-Hydroxoaluminium-hydrogenphosphat oder auf Calciumoxid bzw. Calciumoxid-Calciumhydroxid-Mischungen aufzubringen (EP 1.565.517, EP1.395.630). Beide Verfahren liefern jedoch Produkte, die nur begrenzt einsetzbar sind, da sich die Anwesenheit von Calciumsilikat (Füllstoff) oder Calciumhydroxid auf das Transparenzverhalten negativ auswirken.

Auch das Aufziehen von wässrigen Natriumperchlorat-Lösungen auf Na-Zeolith A liefert Produkte (WO 02/092686), die für transparente Anwendungen ebenfalls nicht geeignet sind. Ferner. wird aus diesen, insbesondere bei PVC-Verarbeitung, Wasserdampf abgegeben. Dieser kann in Bläschenform zu einem negativen Erscheinungsbild des verarbeiteten Substrates führen.

Weiterhin sind Formulierungen auf Basis von organischen Lösungsmitteln auf dem Markt, die NaP, z.B. gelöst in Glykolderivaten, insbesondere Butyldiglykol (BDG) oder Polyethylenglykol (PEG 200, PEG 400) enthalten (US 5.575.951, US 2005/004345). Diese können als Flüssigkeiten aber nur in Weich-PVC eingesetzt werden. Die Verwendung in Hart-PVC, insbesondere in nichttransparenten Anwendungen ist nicht möglich. Diese Produkte sind somit ebenfalls nicht universell einsetzbar. Aus ihren Formulierungen können außerdem flüchtige Komponenten (BDG) austreten, was angesichts der VOC-Problematik ebenfalls ein Nachteil ist.

Wegen dieses oben erwähnten Verhaltens besteht weiterhin ein Bedarf nach Produkten und Verfahren zu deren Herstellung, welche diese Nachteile nicht aufweisen.

Eine Aufgabe der vorliegenden Erfindung liegt somit darin, solche Herstellverfahren und Produkte bereitzustellen.

Die Aufgabe wird gelöst durch ein Verfahren zur Herstellung eines Granulates ausgehend von 2,2',2"-Nitrilotriethanol und Alkali- bzw. Erdalkaliperchlorat den Schritt enthaltend Sprühagglomerierung einer Mischung enthaltend die Komponenten
i. Wasser,
ii. 2,2',2"-Nitrilotriethanol,
iii. mindestens ein Alkali- oder Erdalkaliperchlorat und
iv. eines Trägermaterials,
wobei ein Granulat mit vorgegebenem Restfeuchtegehalt erhalten wird.

Die Aufgabe wird weiterhin gelöst durch ein Granulat erhältlich nach dem erfindungsgemäßen Verfahren.

Es wurde gefunden, dass Alkali- oder Erdalkaliperchlorate in Gegenwart von 2,2',2"-Nitrilotriethanol (Triethanolamin, TEA) homogen granulierbar sind. Dieses Verhalten ist insofern überraschend, da Alkali- oder Erdalkaliperchlorate, insbesondere NaP.H₂O, in TEA nicht homogen unter Ausbildung einer stabilen Phase dispergierbar sind.

Die Sprühagglomerierung erfolgt als Naßverfahren aus wässrigen Mischungen. Sofern Wasser, TEA und mindestens ein Alkali- oder Erdalkaliperchlorat die Mischung bilden, kann diese als echte Lösung vorliegen.

Die Sprühagglomerierung kann auch gegebenenfalls in Gegenwart von halogenhaltigen Polymeren, bevorzugt PVC, erfolgen. In diesen Fällen stellt die Mischung eine Dispersion dar, da das Polymer typischerweise nicht wasserlöslich ist.

Durch die Sprühagglomerierung entstehen feste Produkte als Granulate, in denen die (Erd)Alkaliperchlorate in homogener Form verteilt vorliegen und dabei ein zum Stand der Technik deutlich verbessertes Verhalten zeigen.

So zeigte sich beim Erhitzen gemäß dem Test nach DIN EN ISO/IEC 17025, EU Methode A.14, keine Explosionsneigung und auch die Schlag- oder Reibungsempfindlichkeit ist verbessert (Fallhammer-Test). Außerdem zeigen die Granulate im Vergleich zum Stand der Technik eine geringere Oxidationstendenz (Test nach DIN EN ISO/IEC EU Methode A.17).

Durch diese Eigenschaften sollten die erfindungsgemäßen Granulate auch weniger strengen Gefahrstoff-, Lagerungs- und Brandvorschriften unterworfen werden müssen.

Typischerweise liegt die Restfeuchte des erfindungsgemäßen Granulates unter 0,5 Gew.-% bezogen auf das Gesamtgewicht des Granulates.

Die Sprühagglomerierung wird gemäß der dem Fachmann bekannten Methoden durchgeführt und kann entweder im Sprühtrockner, Sprühgranulator (Topspray oder Bottomspray, Gegenstromverfahren), Wirbelschichtgranulator oder in einem Mischer bzw. Horizontaltrockner erfolgen, wobei das als Komponente i. eingebrachte Wasser entfernt wird, bis dass die gewünschte Restfeuchte erhalten wird. Diese kann durch dem Fachmann bekannte Methoden eingestellt werden. Dabei sind insbesondere die Parameter der Temperatur sowie der Luftstrommenge zur Herstellung des Granulates zu nennen. Einzelheiten zum Verfahren der Sprühagglomerierung können beispielsweise Hans Mollet, Arnold Grubenmann, Formulation Technology - Emulsions, Suspensions, Solid Forms, Wiley-VCH 2001, Kapitel 6.2, Seiten 190 bis 226, entnommen werden.

Die Sprühagglomerierung findet vorzugsweise in einem Reaktor statt, in dem bei Vorhandensein von Trägermaterial dieses entweder mit der Mischung enthaltend die Komponenten i., ii. und iii. eingesprüht oder als Wirbelschicht vorgelegt wird.

Die Mischung, die dann vorzugsweise keine Komponente iv. enthält, wird von oben im Gegenstrom auf das Fließbett aufgesprüht, wobei eine Beschichtung des Trägermaterials, das vorzugsweise in gekömter Form vorliegt, stattfindet. Der Luftstrom ermöglicht eine rasche Trocknung des beschichteten Materials mit nachträglicher Agglomeration der Primärpartikel.

Dieses Verfahren arbeitet sehr schonend, da das Produkt unter milden Bedingungen gebildet wird.

Die Sprühtrocknung kann ebenfalls aus einer wässrigen Suspension erfolgen, wobei die Komponenten i. bis ii. und das Trägermaterial der Komponente iv. als Slurry vorzugsweise in einem Topspray-Granulator versprüht werden.

Darüber hinaus kann die Sprühagglomerierung ohne Komponente iv. erfolgen.

Die Temperatur im Reaktor bei der Sprühagglomeration ist vorzugsweise konstant und liegt im Bereich von 20°C bis 120°C, vorzugsweise 40°C bis 70 °C bei einer Zulufttemperatur, die dann typischerweise im Bereich von 70°C bis 170°C, vorzugsweise im Bereich von 90°C bis 120 °C liegt.

Als Trägermaterialen sind im Allgemeinen halogenhaltige Polymere bevorzugt, insbesondere Polyvinylchlorid, Polyvinylidenchlorid, chloriertes Polyolefin oder chloriertes Polyvinylchlorid.

Bevorzugt ist die Variante in Gegenwart von Trägermaterial, wobei Polyvinylchlorid (Suspensions- oder Emulsions-PVC) als Trägermaterial besonders bevorzugt ist.

Ebenfalls oder zusätzlich können fettsaure Salze des Calciums, Magnesiums oder Aluminiums als Trägermaterial eingesetzt werden. Außerdem kann zusätzlich hochdisperse (hydrophobisierte) Kieselsäure als Abstandshalter (Glidant) eingesetzt werden.

Die Mischung kann gegebenenfalls auch Bindemittel wie, Hydroxyethylzellulosen oder Hydroxypropylmethylzellulosen enthalten.

Vorzugsweise liegt der Anteil des Wassers im Verhältnis zur Summe der Anteile der Komponenten i., ii. und iii. im Bereich von 30 Gew.-% bis 70 Gew.-%.

Weiterhin ist bevorzugt, dass der Anteil der Summe der Anteile der Komponenten ii. und iii. im Verhältnis zur Summe der Anteile der Komponenten i., ii. und iii. im Bereich von 50 Gew.-% bis 80 Gew.-%, bevorzugt von 65 Gew.-% bis 75 Gew.-%, liegt Weiterhin ist bevorzugt, dass die Komponente iv. vorhanden ist und der Anteil der Komponente iv. im Verhältnis zur Summe der Anteile der Komponenten i., ii., iii. und iv. im Bereich 20 Gew.-% bis 98 Gew.-%, vorzugsweise 25 Gew.-% bis 75 Gew.-%, weiter bevorzugt 35 Gew.-% bis 65 Gew.-%, liegt.

Das molare Mengenverhältnis von 2,2',2"-Nitrilotriethanol zum Perchloratanion beträgt vorzugsweise 0,5 bis 2,5, weiter bevorzugt 0,75 bis 1,5 und insbesondere bei 1,0 (äquimolares Verhältnis). Sofern Erdalkaliperchlorate, wie Calciumperchlorat, eingesetzt werden, beträgt aufgrund der Stöchiometrie dementsprechend das Verhältnis insbesondere 2:1 bezogen auf Calciumperchlorat.

Als Perchlorate können beispielsweise Lithium-, Natrium-, Magnesium- und Calciumperchlorat eingesetzt werden. Bevorzugt sind Alkaliperchlorate, wobei Natriumperchlorat und Lithiumperchlorat besonders bevorzugt werden; insbesondere ist Natriumperchlorat bevorzugt. Weiterhin kommen bevorzugt Hydratsalze zum Einsatz. Ganz besonders bevorzugt werden Lithium- und Natriumperchlorat-Hydrat verwendet.

Bei dem erfindungsgemäßen Verfahren wird unter Freisetzung von Hydratwasser ein einfacher und bequemer Zugang zu 2,2',2"-Nitrilotriethanol-perchlorato-(Erd)Alkali-Innerkomplexen ermöglicht (s. WO 2006/0136191), wobei Lithium- oder Natrium-Innerkomplexe bevorzugt sind.

Das Verfahren hat den Vorteil, dass keine organischen Lösungsmittel verwendet werden und als Abfallprodukt nur Wasserdampf anfällt.

Bevorzugt wird die Sprühagglomeration in einer kontinuierlichen Wirbel- oder Strahlschicht durchgeführt, wobei der Produktaustrag vertikal oder horizontal erfolgen kann. Hierdurch kann eine gleichbleibende Produktqualität gewährleistet werden.

Die Granulate weisen in Bezug auf die Kömungsbreite eine schmale Verteilung auf; sie sind außerdem freifließend und nichtstaubend, was die Gefahr einer Staubexplosionen verringert.

Ein Verklumpen wie im Falle von NaP.H₂O findet nicht statt. Ein weiterer Zusatz von Antibackmitteln ist deshalb nicht erforderlich. Durch diese Stoffeigenschaften können Gesundheitsrisiken minimiert, da das Einatmen von Stäuben unterbunden ist und Hautreizungen unterdrückt werden können.

Die Granulate können als Additive für Kunststoffe, bevorzugt zum Stabilisieren oder Vorstabilisieren, insbesondere von PVC dienen. Ganz besonders bevorzugt ist die Stabilisierung von PVC.

Die Granulate sind in PVC bei der Verarbeitung leicht dispergierbar, da diese aufschmelzen bzw. gelieren können. Wegen dieses Verhaltens ist der Zugang zu transparenten Formkörpern möglich. Diese Eigenschaften sind jedoch auch universell nutzbar, da die Granulate auch in gefüllten Formulierungen angewendet werden können und somit die Herstellung von nichttransparenten Formkörpern ermöglicht wird.

Die Erfindung wird durch nachfolgende Beispiele näher erläutert.

### Beispiele

### Beispiel 1:

Sprühagglomeration mit Trägermaterial: In einem GPCG 3.1 Wirbelschichtgranulator der Fa. GLATT GmbH werden 1000g Polyvinylchlorid (S-PVC; K-Wert: 60) vorgelegt. Das Feststoffbett wird mit einem Luftstrom kontinuierlich aufgewirbelt und darauf eine Lösung hergestellt aus 520g (3,7Mol) Natriumperchlorat-Monohydrat und 552g (3,7Mol) Triethanolamin in 1000ml Wasser aufgesprüht. Die Fliessbettemperatur wird dabei konstant zwischen 50 - 60 °C gehalten. Das PVC-Granulat wird sofort von der Lösung umhüllt, wobei die Beschichtung gleichzeitig abtrocknet und ein rieselfähiges, nichtstaubendes Granulat entsteht. Die Hauptfraktion (>80%) weist einen Körnungsbereich von 200 - 400 µm auf. Der Restwassergehalt liegt bei <0,5%.

Das Produkt zeigt beim Erhitzen in dem Test nach DIN EN ISO/IEC 17025, EU Methode A.14 keine Explosionsneigung, ist nicht schlag- und reibungsempfindlich (Fallhammer-Test) und wirkt in dem Test nach DIN EN ISO/IEV 17025, EU Methode A.17 nicht als Oxidans.

### Beispiel 2:

Sprühtrocknung mit Trägermaterial: Ein Slurry hergestellt aus 1000g PVC, 520g (3,7Mol) Natriumperchlorat-Monohydrat und 552g (3,7Mol) Triethanolamin in 2000ml Wasser wird in einem Topspraygranulator versprüht. Das Agglomerat wird hierbei sofort im Luftstrom getrocknet, wobei ein nichtstaubendes, rieselfähiges Granulat anfällt. Mindestens 80% dieses erhaltenen Granulates weisen eine Korngröße von > 200µm auf.

### Beispiel 3:

Sprühtrocknung ohne Trägermaterial: Eine 75%ige wäßrige Lösung hergestellt aus 520g (3,7mol) Natriumperchlorat-Monohydrat und 552g (3,7Mol) Triethanolamin wird analog Beispiel 2 versprüht, wobei man ebenfalls ein nichtstaubendes, rieselfähiges Granulat erhält.

## Patentansprüche

1. Verfahren zur Herstellung eines Granulates ausgehend von 2,2',2"-Nitrilotriethanol und Alkali- oder Erdalkaliperchlorat den Schritt enthaltend
- Sprühagglomerierung einer Mischung enthaltend die Komponenten
i. Wasser,
ii. 2,2',2"-Nitrilotriethanol,
iii. mindestens ein Alkali- oder Erdalkaliperchlorat und
iv. eines Trägermaterials,
wobei ein Granulat mit vorgegebenem Restfeuchtegehalt erhalten wird.

2. Verfahren nach Anspruch 1, **dadurch gekennzeichnet, dass** das mindestens eine Perchlorat in Form seines Hydrates oder eines seiner Hydrate eingesetzt wird.

3. Verfahren nach Anspruch 1 oder 2, **dadurch gekennzeichnet, dass** Lithium- oder Natriumperchlorat eingesetzt wird.

4. Verfahren nach einem der Ansprüche 1 bis 3, **dadurch gekennzeichnet, dass** als Trägermaterial ein halogenhaltiges Polymer eingesetzt wird.

5. Verfahren nach Anspruch 4, **dadurch gekennzeichnet, dass** das halogenhaltige Polymer Polyvinylchlorid, Polyvinylidenchlorid, chloriertes Polyolefin oder chloriertes Polyvinylchlorid darstellt.

6. Verfahren nach Anspruch 1 bis 5, **dadurch gekennzeichnet, dass** das molare Verhältnis von 2,2',2"-Nitrilotriethanol zum Perchloratanion im Bereich von 0,5 bis 2,5 liegt.

7. Verfahren nach einem der Ansprüche 1 bis 6, **dadurch gekennzeichnet, dass** der Anteil des Wassers im Verhältnis zur Summe der Anteile der Komponenten i., ii. und iii. im Bereich von 30 Gew.-% bis 70 Gew.-% liegt.

8. Verfahren nach einem der Ansprüche 1 bis 7, **dadurch gekennzeichnet, dass** der Anteil der Summe der Anteile der Komponenten ii. und iii. im Verhältnis zur Summe der Anteile der Komponenten i., ii. und iii. im Bereich von 50 Gew.-% bis 80 Gew.-% liegt.

9. Verfahren nach einem der Ansprüche 1 bis 8, **dadurch gekennzeichnet, dass** der Anteil der Komponente iv. im Verhältnis zur Summe der Anteile der Komponenten i., ii., iii. und iv. im Bereich 20 Gew.-% bis 98 Gew.-% liegt.

10. Verfahren nach einem der Ansprüche 1 bis 9, **dadurch gekennzeichnet, dass** der Restfeuchtegehalt des Granulats unter 0,5 Gew.-% bezogen auf das Granulat beträgt.

11. Verfahren nach einem der Ansprüche 1 bis 10, **dadurch gekennzeichnet, dass** die Sprühagglomerierung in einem Wirbelschichtgranulator, Topspray-Granulator, Horizontaltrockner oder in einem Horizontalmischer stattfindet.

12. Verfahren nach einem der Ansprüche 1 bis 11, **dadurch gekennzeichnet, dass** die Sprühagglomerierung in einem Luftstrom bei einer Temperatur im Bereich von 20 °C bis 120 °C durchgeführt wird.

13. Verfahren nach einem der Ansprüche 1 bis 13, **dadurch gekennzeichnet, dass** die Sprühagglomeration in einer kontinuierlichen Wirbel- oder Strahlschicht durchgeführt wird.

14. Verfahren nach einem der Ansprüche 1 bis 13, **dadurch gekennzeichnet, dass** 2,2',2"-Nitrilotriethanol-perchlorato-Alkali- oder Erdalkali-Innerkomplexe entstehen.

15. Granulat erhältlich nach einem Verfahren gemäß einem der Ansprüche 1 bis 14.

16. Verwendung eines Granulats nach einem der Ansprüche 1 bis 15 als Polymeradditiv zum Stabilisieren oder Vorstabilisieren des Polymers.

## Claims

1. Process for producing a granulated material derived from 2,2',2"-nitrilotriethanol and alkali metal perchlorate or alkaline earth metal perchlorate comprising the step of
- spray agglomeration of a mixture comprising the following components:
i. water,
ii. 2,2',2"-nitrilotriethanol,
iii. at least one alkali metal perchlorate or alkaline earth metal perchlorate and
iv. a carrier material,
where a granulated material is obtained with prescribed residual moisture content.

2. Process according to Claim 1, **characterized in that** the at least one perchlorate is used in the form of its hydrate or of one of its hydrates.

3. Process according to Claim 1 or 2, **characterized in that** lithium perchlorate or sodium perchlorate is used.

4. Process according to any of Claims 1 to 3, **characterized in that** a halogenated polymer is used as carrier material.

5. Process according to Claim 4, **characterized in that** the halogenated polymer is polyvinyl chloride, polyvinylidene chloride, chlorinated polyolefin or chlorinated polyvinyl chloride.

6. Process according to any of Claims 1 to 5, **characterized in that** the molar ratio of 2,2',2"-nitrilotriethanol to the perchlorate anion is in the range from 0.5 to 2.5.

7. Process according to any of Claims 1 to 6, **characterized in that** the proportion of the water as a ratio to the sum of the proportions of components i., ii. and iii. is in the range from 30% by weight to 70% by weight.

8. Process according to any of Claims 1 to 7, **characterized in that** the proportion of the sum of the proportions of components ii. and iii. as a ratio to the sum of the proportions of components i., ii. and iii. is in the range from 50% by weight to 80% by weight.

9. Process according to any of Claims 1 to 8, **characterized in that** the proportion of component iv. as a ratio to the sum of the proportions of components i., ii., iii. and iv. is in the range from 20% by weight to 98% by weight.

10. Process according to any of Claims 1 to 9, **characterized in that** the residual moisture content of the granulated material is below 0.5% by weight, based on the granulated material.

11. Process according to any of Claims 1 to 10, **characterized in that** the spray agglomeration takes place in a fluidized-bed granulator, topspray granulator, or horizontal dryer or in a horizontal mixer.

12. Process according to any of Claims 1 to 11, **characterized in that** the spray agglomeration is carried out in a stream of air at a temperature in the range from 20°C to 120°C.

13. Process according to any of Claims 1 to 13, **characterized in that** the spray agglomeration is carried out in a continuous fluidized bed or continuous spouted bed.

14. Process according to any of Claims 1 to 13, **characterized in that** 2,2',2"-nitrilotriethanol-perchlorato-alkali-metal inner complexes or alkaline-earth-metal inner complexes are produced.

15. Granulated material obtainable by a process according to any of Claims 1 to 14.

16. Use of a granulated material according to any of Claims 1 to 15 as polymer additive for stabilizing or prestabilizing the polymer.

## Revendications

1. Procédé pour la préparation d'un granulat partant de 2,2',2"-nitrilotriéthanol et de perchlorate de métal alcalin ou alcalino-terreux contenant l'étape de
- agglomération par pulvérisation d'un mélange contenant les composants
i. eau,
ii. 2,2',2"-nitrilotriéthanol,
iii. au moins un perchlorate de métal alcalin ou alcalino-terreux et
iv. le cas échéant un matériau support,
où on obtient un granulat présentant une teneur en humidité résiduelle prédéfinie.

2. Procédé selon la revendication 1, **caractérisé en ce qu'**on utilise au moins un perchlorate sous forme de son hydrate ou d'un de ses hydrates.

3. Procédé selon la revendication 1 ou 2, **caractérisé en ce qu'**on utilise du perchlorate de lithium ou de sodium.

4. Procédé selon l'une quelconque des revendications 1 à 3, **caractérisé en ce qu'**on utilise comme matériau support un polymère halogéné.

5. Procédé selon la revendication 4, **caractérisé en ce que** le polymère halogéné est le poly(chlorure de vinyle), le poly(chlorure de vinylidène), une polyoléfine chlorée ou le poly(chlorure de vinyle) chloré.

6. Procédé selon la revendication 1 à 5, **caractérisé en ce que** le rapport molaire de 2,2',2"-nitrilotriéthanol à anion perchlorate se situe dans la plage de 0,5:2,5.

7. Procédé selon l'une quelconque des revendications 1 à 6, **caractérisé en ce que** la proportion d'eau par rapport à la somme des composants i., ii. et iii. se situe dans la plage de 30% en poids à 70% en poids.

8. Procédé selon l'une quelconque des revendications 1 à 7, **caractérisé en ce que** la proportion de la somme des proportions des composants ii. et iii. par rapport à la somme des proportions des composants i., ii. et iii. se situe dans la plage de 50% en poids à 80% en poids.

9. Procédé selon l'une quelconque des revendications 1 à 8, **caractérisé en ce que** la proportion du composant iv. par rapport à la somme des proportions des composants i., ii., iii. et iv. se situe dans la plage de 20% en poids à 98% en poids.

10. Procédé selon l'une quelconque des revendications 1 à 9, **caractérisé en ce que** la teneur en humidité résiduelle du granulat est inférieure à 0,5% en poids par rapport au granulat.

11. Procédé selon l'une quelconque des revendications 1 à 10, **caractérisé en ce que** l'agglomération par pulvérisation a lieu dans un granulateur à lit fluidisé, un granulateur Topspray, un sécheur horizontal ou dans un mélangeur horizontal.

12. Procédé selon l'une quelconque des revendications 1 à 11, **caractérisé en ce que** l'agglomération par pulvérisation est réalisée dans un flux d'air à une température dans la plage de 20°C à 120°C.

13. Procédé selon l'une quelconque des revendications 1 à 13, **caractérisé en ce que** l'agglomération par pulvérisation est réalisée dans une couche fluidisée ou projetée continue.

14. Procédé selon l'une quelconque des revendications 1 à 13, **caractérisé en ce qu'**il se forme des complexes internes de 2,2',2"-nitrilotriéthanol-perchlorato-métal alcalin ou alcalino-terreux.

15. Granulat pouvant être obtenu selon un procédé selon l'une quelconque des revendications 1 à 14.

16. Utilisation d'un granulat selon l'une quelconque des revendications 1 à 15 comme additif pour polymères en vue de la stabilisation ou de la préstabilisation du polymère.
